Europäisches Patentamt

(19) European Patent Office

Office européen des brevets

(11) Veröffentlichungsnummer: **0 019 579**
**B1**

(12) **EUROPÄISCHE PATENTSCHRIFT**

(45) Veröffentlichungstag der Patentschrift:
29.09.82

(21) Anmeldenummer: **80810133.1**

(22) Anmeldetag: **21.04.80**

(51) Int. Cl.³: **G 05 D 11/13**, G 01 N 1/28

(54) **Mischvorrichtung.**

(30) Priorität: **27.04.79 CH 3992/79**

(43) Veröffentlichungstag der Anmeldung:
**26.11.80 Patentblatt 80/24**

(45) Bekanntmachung des Hinweises auf die Patenterteilung:
**29.09.82 Patentblatt 82/39**

(84) Benannte Vertragsstaaten:
**BE CH DE FR GB LI LU NL SE**

(56) Entgegenhaltungen:
EP-A-0 003 563
DE-A-1 950 770
DE-A-2 746 520
FR-A-2 161 039
FR-A-2 332 528
US-A-3 620 134

(73) Patentinhaber: **CIBA-GEIGY AG, Patentabteilung
Postfach, CH-4002 Basel (CH)**

(72) Erfinder: **Bartels, Hermann, Dr., Bollwerkstrasse 112,
CH-4102 Binningen (CH)**
Erfinder: **Mez, Hans-Christian, Dr., Grellingerstrasse 62,
CH-4052 Basel (CH)**
Erfinder: **Huber, Walter, Dr., Talweg 45, CH-4125 Riehen
(CH)**
Erfinder: **Stolz, Hans-Peter, Talweg 4, CH-4133 Pratteln
(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Mischvorrichtung

Die Erfindung betrifft eine Mischvorrichtung gemäss dem Oberbegriff des Patentanspruchs 1.

Zur Beschickung von Durchflussmesszellen werden heute praktisch ausschliesslich nach der sogenannten «Stopped-Flow»-Technik arbeitende Mischvorrichtungen verwendet. Eine typische Vorrichtung dieser Art ist z.B. in «Analytical Chemistry» Vol. 48, No. 12, Okt. 1976 pp. 1686-1693 beschrieben. Ein gemeinsamer Nachteil der Mischvorrichtungen dieser Art ist, dass sie von einem gemeinsamen Motor angetriebene Dosierpumpen, z.B. Kolbenbüretten, für die zu mischenden Flüssigkeiten aufweisen und dementsprechend ohne konstruktive Änderungen bzw. Austausch der Büretten keine Änderung des einmal gewählten Mischungsverhältnisses zulassen.

Anderseits ist eine vor allem in der biomedizinischen und klinischen Chemie verwendete Dosier- und Verdünnungsvorrichtung bekannt, mit welcher Mischungen bzw. Verdünnungen mit in weiten Grenzen variablem Verdünnungsverhältnis hergestellt werden können. Diese bekannte Vorrichtung umfasst im wesentlichen zwei schrittmotorgesteuerte Kolbenbüretten, die über zwei Dreiwegeventile je nach deren Stellung mit je einem Vorratsgefäss oder mit einem Mischgefäss verbunden werden können. Eine elektronische Steuerung steuert die Bürettenmotoren und Ventile so, dass in sie eingegebene Volumina der beiden zu vermischenden Flüssigkeiten automatisch von den Büretten aufgezogen werden. Das Ausstossen der aufgezogenen Flüssigkeitsvolumina erfolgt dann mit konstanter Geschwindigkeit, welche von Hand einstellbar ist.

Diese bekannte Verdünnungsvorrichtung wird zur direkten Beschickung von Durchflussmesszellen praktisch nicht eingesetzt. Die Anwendung der Vorrichtung für diesen Zweck würde nämlich voraussetzen, dass, damit das Mischungsverhältnis im durch die Messzelle gepumpten Flüssigkeitsstrom konstant ist, die Flüssigkeitsvolumina von den beiden Büretten mit konstanter Geschwindigkeit und synchron, d.h. in der gleichen Zeit ausgestossen werden. Die Büretten müssten also zugleich starten und zugleich wieder stoppen. Für unterschiedliche Mischungsverhältnisse wären somit natürlich auch unterschiedliche Dosiergeschwindigkeiten erforderlich.

Diesen Anforderungen wird die bekannte Verdünnungsvorrichtung nicht oder nur unzureichend gerecht. Insbesondere liegt dies daran, dass die Dosiergeschwindigkeiten für jedes Mischungsverhältnis neu von Hand eingestellt werden müssen. Dies ist erfahrungsgemäss recht umständlich und führt ausserdem auch nur in den seltensten Fällen zum gewünschten Erfolg. Insbesondere ist es schwierig, die Geschwindigkeiten mit der oftmals erforderlichen relativ hohen Präzision einzustellen.

Dasselbe gilt auch für eine Reihe weiterer bekannter Verdünnungsvorrichtungen, wie sie z.B. in den FR-A-2 161 039 und FR-A-2 332 528 sowie der DE-A-1 950 770 beschrieben sind.

Aufgabe der Erfindung ist, eine verbesserte Mischvorrichtung zu schaffen, bei der das Mischungsverhältnis auf einfachste Weise in weiten Grenzen mit hoher Präzision variabel einstellbar ist und die unabhängig vom gewählten Mischungsverhältnis automatisch stets einen im wesentlichen homogenen Flüssigkeitsstrom gewährleistet und damit insbesondere für die direkte Beschickung von Durchflussmesszellen geeignet ist. Diese Aufgabe wird bei einer Vorrichtung der eingangs definierten Art durch die kennzeichnenden Merkmale des Patentanspruchs 1 gelöst.

In der DE-A-2 746 520 ist eine Mischvorrichtung beschrieben, bei der das Mischungsverhältnis von zwei Flüssigkeiten mittels elektronisch gesteuerter, schrittmotorgetriebener Förderpumpen eingestellt werden kann. Diese Vorrichtung erzeugt im Unterschied zu der gemäss der Erfindung keinen volumetrisch begrenzten, sondern einen kontinuierlichen Flüssigkeitsstrom. Bei einem solchen kontinuierlichen Strom ist das Mischungsverhältnis einzig und allein durch die Förderleistungen der beiden Pumpen festgelegt. Bei einem volumetrisch begrenzten Strom, der über die gesamte Strömungsdauer homogen sein, also ein zeitlich konstantes Mischungsverhältnis aufweisen soll, genügt jedoch die Festlegung der Förderleistungen allein noch nicht, sondern es muss zudem noch gewährleistet sein, dass die beiden Pumpen exakt synchron laufen, d.h., die jeweiligen Flüssigkeitsvolumina gleichmässig in genau derselben Zeitspanne fördern. Diesbezüglich enthält jedoch die DE-A-2 746 520 keine Lehre. Ausserdem wird das Mischungsverhältnis bei dieser Vorrichtung nicht durch die absoluten Volumina der beteiligten Komponenten, sondern durch die gewünschte Konzentration (Promille) einer der beiden Komponenten im Gemisch gesteuert. Eine derartige Steuerung ist weniger komfortabel und flexibel als die über die direkte Eingabe der beiden Teilvolumina.

Im folgenden wird die Erfindung anhand der Zeichnung näher erläutert. Es zeigen:

Fig. 1 ein erstes Ausführungsbeispiel der erfindungsgemässen Vorrichtung in schematischer Darstellung,

Fig. 2 ein Blockschaltbild der elektrischen Steuerung in Fig. 1 und

Fig. 3 die wesentlichsten Teile eines zweiten Ausführungsbeispiels, ebenfalls in schematischer Darstellung.

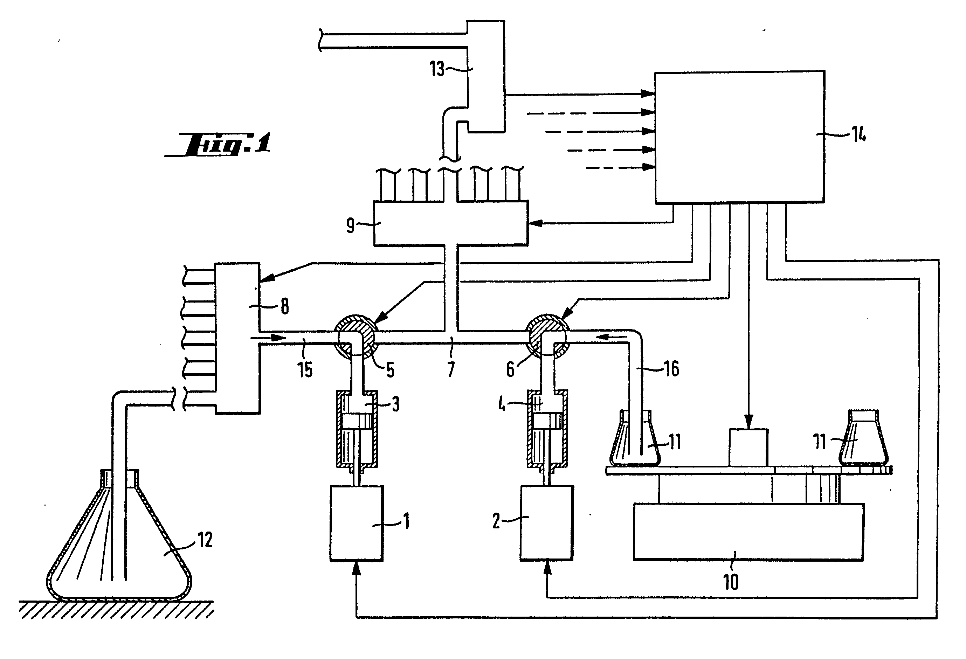

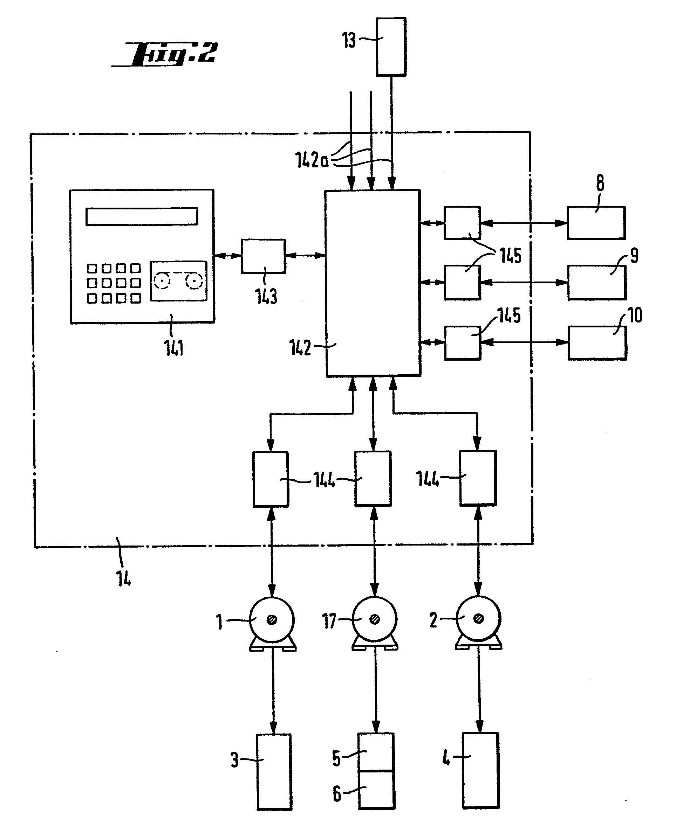

Die in Fig. 1 dargestellte Vorrichtung umfasst als wesentlichste Teile zwei von Schrittmotoren 1 und 2 angetriebene Kolbenbüretten 3 und 4, zwei durch einen nur in Fig. 2 gezeigten gemeinsamen Motor 17 angetriebene Umschaltventile 5 und 6, eine im wesentlichen aus einem einfachen T-Stück bestehende Mischarmatur 7, zwei Mehrwegeventile 8 und 9, einen Drehteller-Probenwechsler 10 mit Vorratsgefässen 11, ein weiteres Vorratsgefäss 12, eine Durchflussmesszelle 13 und eine elektrische Steuerung 14 für die diversen Motoren und Ventile.

Die Kolbenbüretten und die Umschaltventile sowie die diversen Antriebsmotoren sind gleich oder ähnlich wie bei der unter der Bezeichnung «OEM-Diluter-Dispenser Mark II» bei der Firma Hamilton Bonaduz AG, Bonaduz, Schweiz erhältlichen Mischvorrichtung.

Die Funktionsweise der Vorrichtung ist nachstehend beschrieben, wobei zunächst ohne weitere Einzelheiten vorausgesetzt wird, dass die Steuerung 14 die diversen Ventile und Motoren entsprechend betätigt.

Mittels des Mehrwegeventils 8 und durch geeignetes Positionieren des Probenwechslers 10 werden die Vorratsbehälter 11 und 12 mit den gewünschten zu vermischenden Flüssigkeiten ausgewählt und an die Zufuhrleitungen 15 und 16 zu den Umschaltventilen 5 und 6 angeschlossen. Nun werden die Ventile 5 und 6 in die in Fig. 1 gezeigte Stellung gebracht, in welcher sie die Zufuhrleitungen mit den Kolbenbüretten 3 bzw. 4 verbinden. Diese werden nun betätigt und saugen je das gewünschte Probenvolumen ein. Anschliessend werden die Umschaltventile 5 und 6 umgestellt und die Büretten stossen dann die beiden Probeflüssigkeiten gleichzeitig in die Mischarmatur 7 aus. Von dort gelangt das Gemisch über das Mehrwegeventil 9 je nach dessen Stellung in die gerade gewünschte Durchflussmesszelle 13 und von dieser in irgendeine Abflussleitung.

Damit das in die Durchflussmesszelle 13 gelangende Flüssigkeitsgemisch möglichst homogen ist, ist es wesentlich, dass die beiden Büretten ihre respektiven Probenvolumina mit gleichförmiger Geschwindigkeit und vor allem völlig synchron, d.h. in der selben Zeit ausstossen. Die Geschwindigkeiten bzw. Dosierleistungen der beiden Büretten hängen natürlich von den jeweils eingestellten beiden Probenvolumina bzw. von deren Verhältnis ab. Die Steuerung 14 enthält deshalb Mittel, die eine Vorwahl der gewünschten Probenvolumina erlauben und in noch zu beschreibender Weise anhand dieser vorgewählten Werte die Kolbengeschwindigkeiten der beiden Büretten berechnen und die Büretten entsprechend ansteuern.

Die in Fig. 1 dargestellte Vorrichtung ist universell einsetzbar. Mit den Mehrwegeventilen 8 und 9 sowie mit dem Probenwechsler 10 können z.B. über die Steuerung 14 programmgesteuert automatisch die jeweils gewünschten Probenflüssigkeiten ausgewählt bzw. eine Vielzahl von verschiedenen Messzellen beschickt werden. Es versteht sich, dass für geringere Ansprüche auf die Mehrwegeventile und/oder den Probenwechsler verzichtet werden kann.

Die Steuerung 14 ist in Fig. 2 detaillierter dargestellt. Sie umfasst im wesentlichen einen programmierbaren Tischrechner 141, eine Haupt-Schnittstelle 142, eine untergeordnete Verbindungs-Schnittstelle 143, und eine Reihe von Treiberschaltungen 144 und 145. Die Verbindungsschnittstelle 143 stellt die Verbindung zwischen dem Tischrechner 141 und der Hauptschnittstelle 142 dar und könnte natürlich auch bereits z.B. im ersteren enthalten sein. Die Treiberschaltungen 144 u. 145 verbinden die Hauptschnittstelle 142 mit den Antriebs- und Stellmotoren für die beiden Kolbenbüretten 3 und 4, die beiden Umschaltventile 5 und 6, die beiden Mehrwegeventile 8 und 9 und den Probenwechsler 10. Die Hauptschnittstelle 142 ist ferner mit Eingängen 142a versehen, an welche verschiedene Messzellen 13 angeschlossen werden können. Selbstverständlich sind noch diverse Rückmeldeleitungen und dgl. vorhanden, welche aber für das Verständnis der Funktion der Vorrichtung unwesentlich und daher nicht dargestellt sind.

Der programmierbare Tischrechner 141 kann z.B. der Rechner HP-9815A der Fa. Hewlett Packard, Palo Alto, California USA sein.

Bei der Hauptschnittstelle 142 handelt es sich z.B. um einen Mikrocomputeraufbau. Dieser besteht z.B. aus einem DCE-1-Mikrocomputer der Fa. Data Applications International S.A., Bruxelles, Belgien, als Zentraleinheit mit mehreren Taktgebern und drei Parallel-I/O-Schnittstellen sowie einer Seriell-I/O-Schnittstelle, aus einem Analog-Multiplexer mit nachgeschaltetem Analog-Digital-Wandler und aus einem Digital-Multiplexer zum Einlesen von BCD-Daten.

Die Schnittstelle 143 ist eine konventionelle Seriell-I/O-Schnittstelle. Die diversen Treiberschaltungen 144 und 145 sind ebenfalls herkömmlicher Art und hängen in ihrer Konstruktion natürlich von der Art der zu steuernden Motoren bzw. Ventile ab.

Wie schon aus dem Vorstehenden indirekt hervorgeht, ist die Steuerung 14 mit verteilter Intelligenz organisiert, und zwar derart dass der Tischrechner den befehlenden Teil bildet, während die Hauptschnittstelle für die Ausführung der vom Rechner erhaltenen Befehle sorgt und dies entsprechend an den Rechner zurückmeldet. Eine ähnliche Steuerung bzw. Organisation derselben ist z.B. auf Seiten 1686-1693 in «Analytical Chemistry», Vol. 48, No. 12, Oktober 1976 beschrieben.

Im einfachsten Fall werden die gewünschten Volumina der beiden zu vermischenden Probenkomponenten in den Rechner über dessen Tastatur eingegeben. Dieser berechnet dann daraus die zeitlichen Abstände zwischen den einzelnen Schrittimpulsen für die beiden Büretten-Schrittmotoren und gibt die Volumina- und Abstandsdaten nebst einem Ausführbefehl an die Hauptschnittstelle weiter. Letztere führt nun autonom einen Bürettenzyklus durch, indem sie die Büretten — ausgehend von einer durch eine Nullstellungsroutine erreichten definierten Anfangsstellung — die gewünschten Volumina mit Maximalgeschwindigkeit aufsaugen und dann mit den durch die genannten Impulsabstände gegebenen Geschwindigkeiten wieder ausstossen lässt. Die Schrittimpulse für die Bürettenmotoren 1 und 2 und die Steuerimpulse für den Ventilstellmotor 17 werden dabei von der Hauptschnittstelle 142 mittels deren internen Taktgebern entsprechend den vom Rechner erhaltenen Daten erzeugt. Nach Ablauf des Bürettenzyklus erfolgt wieder eine Rückmeldung an den Rechner.

Die vorstehenden Funktionsabläufe sind nachfolgend nochmals in Form eines Fussdiagrammes übersichtlich zusammengefasst.

Nullstellungsroutine:

```
┌─────────────────────────────────────────────────────────────┐
│   Ventile 5 und 6 in Ausstossstellung bringen, kontrollieren, │
│   Bewegungsrichtung Motoren 1 und 2 auf Ausstossen bringen    │
└─────────────────────────────────────────────────────────────┘
                            │
                            ▼
                ┌───────────────────────────┐
                │   1 Puls an Motor 1 abgeben │
                │   1 Puls an Motor 2 abgeben │
                └───────────────────────────┘
                            │
                            ▼
                ┌───────────────────┐
                │   40 ms warten     │
                └───────────────────┘
                            │
                            ▼
                ┌───────────────────────────┐
                │   1 Puls an Motor 1 abgeben │
                │   1 Puls an Motor 2 abgeben │
                └───────────────────────────┘
                            │
                            ▼
                ┌───────────────────┐
                │   40 ms warten     │
                └───────────────────┘
                            │
                            ▼
        nein  ◁───────⟨ Bürette 3 am ⟩───────▷  ja
              │         ⟨ oberen Anschlag ? ⟩        │
              ▼                                       │
    ┌───────────────────────────┐                    │
    │   1 Puls an Motor 1 abgeben │                   │
    └───────────────────────────┘                    │
              │                                       ▼
```

```
ja ←── Bürette 4 am        nein ──○── nein        Bürette 4 am        ja
        oberen Anschlag ?                          oberen Anschlag ?
                    │
                    ▼
        ┌───────────────────────────┐
        │   1 Puls an Motor 2 abgeben │
        └───────────────────────────┘
```

┌─────────────────────────────────────────────────────────────────┐
│  Ventile 5 und 6 in Ansaugstellung bringen, kontrollieren         │
│  Bewegungsrichtung Motoren 1 und 2 auf Ansaugen bringen           │
└─────────────────────────────────────────────────────────────────┘

┌─────────────────────────────────────────┐
│  16 Pulse an Motor 1 abgeben              │
│  16 Pulse an Motor 2 abgeben              │
└─────────────────────────────────────────┘

┌─────────────────────────────────────────────────────────────────┐
│  Ventile 5 und 6 in Ausstossstellung bringen, kontrollieren       │
│  Bewegungsrichtung Motoren 1 und 2 auf Ausstossen bringen         │
└─────────────────────────────────────────────────────────────────┘

┌─────────────────────────────────────────────────────────────────┐
│  «Ø» an Tischrechner senden für Abschluss der Routine             │
└─────────────────────────────────────────────────────────────────┘

(   Rücksprung aus Routine   )

Bürettenzyklus:

Unter Impulszahlen $I_1$ und $I_2$ werden im folgenden die in Vielfachen der kleinsten Volumeneinheit, die von einer Bürette 3 oder 4 aufgezogen bzw. abgegeben werden kann und die durch den Vorschub des Bürettenkolbens um einen Schritt gegeben ist, gemessenen, eingestellten oder vorprogrammierten Probenvolumina verstanden. In einem praktischen Ausführungsbeispiel ist der Hub der Büretten auf maximal 800 Schritte begrenzt. Das Probenvolumen $I_3$ oder $I_4$ kann daher maximal 800 sein. Damit lassen sich theoretisch Mischungsverhältnisse von 1 : 800 bis 800 : 1 realisieren. In der Praxis spielt jedoch noch das Verhältnis Messzellenvolumen : Gesamtprobenvolumen eine Rolle, so dass man auf praktische Mischverhältnisse von 1 : 80 bzw. 80 : 1 kommt.

Unter Taktzahlen $T_1$ und $T_2$ sind die in Periodenlängen der in der Hauptschnittstelle vorhandenen Echtzeittaktgeber gemessenen Abstände zwischen zwei Schrittimpulsen für den einen bzw. den anderen Bürettenschrittmotor 3, 4 zu verstehen. Zwischen den Impulszahlen $I_1$ und $I_2$ und den Taktzahlen $T_1$ und $T_2$ besteht naturgemäss ein umgekehrt proportionaler Zusammenhang. Die Taktzahlen werden in noch zu beschreibender Weise vom Tischrechner aus den eingegebenen Impulszahlen ermittelt und an die Hauptschnittstelle weitergegeben. Die Grundtaktperiode der Echtzeittaktgeber im hier verwendeten Mikrocomputer beträgt 64 μsec entsprechend einer Frequenz von 15,625 kHz.

Bürettenzyklus:

Impulszahlen auf Zulässigkeit prüfen ($\leq 800$)
Taktzahlen auf Zulässigkeit prüfen ($\varnothing$ oder $\geq 50$)

Test ok ?

nein → «-1» als Fehlermeldung an Tischrechner senden

Rücksprung

ja

«$\varnothing$» an Tischrechner senden

Ventile 5 und 6 in Ansaugstellung bringen
Bewegungsrichtung Motoren 1 und 2 auf Ansaugen bringen

Abgabe von $I_1$ Schrittimpulsen an Motor 1
Abgabe von $I_2$ Schrittimpulsen an Motor 2
jeweils im Abstand von 50 Grundtaktperioden $T_1 = T_2 = 50$

Ventile 5 und 6 in Ausstossstellung bringen
Bewegungsrichtung Motoren 1 und 2 auf Ausstossen bringen

Hardware-Timer 1 mit Taktzahl $T_1$ initialisieren    *
Hardware-Timer 2 mit Taktzahl $T_2$ initialisieren

Nach Ablauf von Timer 1 einen Puls an Motor 1    *
Nach Ablauf von Timer 2 einen Puls an Motor 2

```
                    ┌──────────────────┐  *
            nein    │  Anzahl Impulse  │
  ←─────────────────┤  an Motor 1 = I₁?│
                    │  Anzahl Impulse  │
                    │  an Motor 2 = I₂?│
                    └────────┬─────────┘
                             │ ja
                    ┌────────▼─────────┐
                    │ «Ø» an Tischrechner senden │
                    └────────┬─────────┘
                             │
                    ┌────────▼─────────┐
                    │   Rücksprung     │
                    └──────────────────┘
```

Anzahl Impulse an Motor 1 = $I_1$?
Anzahl Impulse an Motor 2 = $I_2$?

«Ø» an Tischrechner senden

Rücksprung

*
Anmerk.: Diese drei Schritte erfolgen natürlich für die beiden Büretten getrennt.

Wie schon gesagt, werden die die Abstände zwischen den Schrittimpulsen der beiden Büretten bestimmenden Taktzahlen $T_1$ und $T_2$ aus aus den beiden eingegebenen Impulszahlen $T_1$ und $T_2$ vom Tischrechner berechnet. Ein 100%ig genaues Mischungsverhältnis würde erreicht, wenn die Taktzahlen für die beiden Büretten sich umgekehrt proportional zu den Impulszahlen verhielten. Sind jedoch die Impulszahlen teilerfremd (z.B. 800 : 761), so ergäben sich bei einem derartigen Vorgehen unerwünscht lange Dosierzeiten (es können ja nur ganzzahlige Taktzahlen vorkommen).

Bei den im Ausführungsbeispiel zur Verwendung gelangenden Kolbenbüretten bzw. den zugehörigen Schrittmotoren ist ein zeitlicher Mindestabstand der einzelnen Schrittimpulse von 3,2 msec entsprechend 10 Grundtaktperioden erforderlich. Durch diesen Mindestabstand ist die Dosiergeschwindigkeit nach oben begrenzt.

Gemäss einem weiteren Aspekt der Erfindung wird nun die Auffindung der Taktzahlen derart verbessert, dass zwar ein kleiner (z.B. 1‰) Fehler in Kauf genommen wird, dabei aber wesentlich kürzere Dosierzeiten erreicht werden. Dazu wird die Taktzahl für das grössere Probenvolumen bzw. die grössere Impulszahl, z.B. $T_1$, ausgehend vom Minimalwert 50 solange um jeweils Eins erhöht, bis sich die nach der Formel $T_2 = I_1 \cdot T_1 : I_2$ ergebende Taktzahl $T_2$ für das kleinere Volumen um nicht mehr als einen bestimmten Betrag, z.B. 1‰, von einer ganzen Zahl unterscheidet. Mit dieser Methode findet man z.B. für die Impulszahlen 800 und 761 bei einem Fehler von 0,5‰ die Taktzahlen 58 und 61, was zu einer Gesamtdosierzeit von 3 sec. gegenüber 39 sec. bei der absolut genauen Berechnung führt.

Die Berechnung der Taktzahlen $T_1$ und $T_2$ geschieht im Tischrechner, der dazu gemäss dem folgenden Flussschema programmiert sein kann:

```
                    ⌣
                    │
                    ▼
            ┌───────────────┐
            │   i = 50      │
            │   c = I₁ : I₂  │
            └───────┬───────┘
                    │
      ┌─────────────▼
      │     ┌───────────────┐
      │     │   j = i * c   │
      │     │ k = int (j+½) │
      │     └───────┬───────┘
      │             │
```

i = 50
c = $I_1 : I_2$

j = i * c
k = int (j + ½)

$I_1$: grössere Impulszahl
$I_2$: kleinere Impulszahl

«int» = Routine zur Berechnung des ganzzahligen Anteils einer Zahl

$$? \quad j \geq 1000 * lj\text{-}kl \quad ?$$

nein    ja

$$i < i_{max}$$

nein

ja

$$i = i + 1$$

$$T_1 = i$$
$$T_2 = k$$

Ende

$i_{max}$ ist ein willkürlich gewählter Schwellenwert zur Begrenzung der Dosierzeit.

Gemäss Vorstehendem wurden die zu dosierenden Volumina pro Mischvorgang jedesmal von neuem in den Rechner gegeben. Anstelle einer manuellen Eingabe der Volumina können diese mittels des Programmspeichers des Tischrechners auch vorprogrammiert und dann automatisch eingegeben werden. Auf diese Weise lassen sich dann sehr bequem Serien von Mischungs- oder Verdünnungsoperationen — z.B. mit ändernden Volumenverhältnissen — vollautomatisch durchführen. Sofern die Vorrichtung mit Probenwechsler und/oder Mehrwegeventilen ausgestattet ist, können so auch verschiedene Flüssigkeiten automatisch gemischt und je nach Bedarf eventuell auch verschiedene Messzellen mit den Gemischen beaufschlagt werden. Über die Analog-Eingänge der Hauptschnittstelle ist es auch möglich, die einzelnen Mischungsoperationen in Abhängigkeit von den durch die Messzellen gelieferten Messdaten zu steuern. Es braucht dazu lediglich der Tischrechner entsprechend programmiert zu werden.

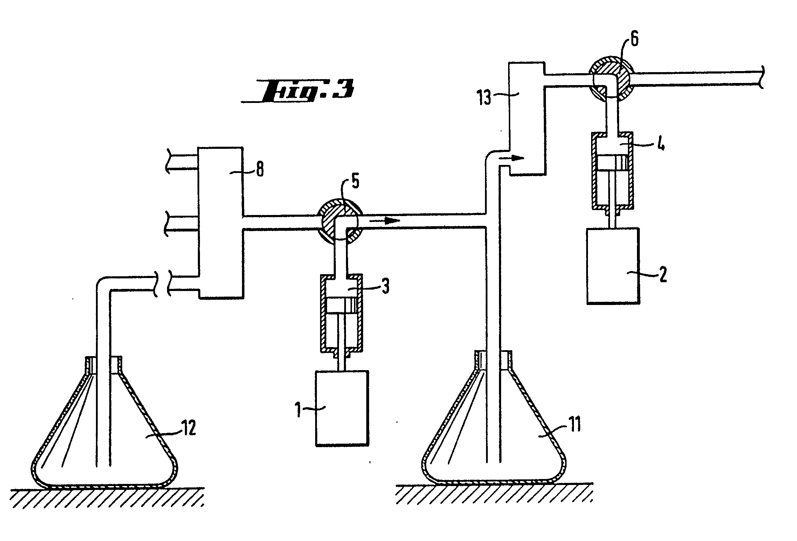

In Fig. 3 ist eine Variante der erfindungsgemässen Vorrichtung dargestellt. Sie umfasst ebenfalls zwei Büretten 3 und 4 mit den Schrittmotoren 1 und 2, zwei Umschaltventile 5 und 6, ein Mehrwegeventil 8, eine Messzelle 13 und zwei Probenvorratsgefässe 11 und 12. Die Motoren und Ventile werden analog Fig. 1 von einer nicht gezeigten Steuerung gesteuert.

Der Unterschied gegenüber der Variante nach Fig. 1 besteht, abgesehen von der einfacheren Ausführung, in der Zusammenschaltung der Büretten, Vorratsgefässe und Messzelle. Die Bürette 3 ist gleich wie in Fig. 1 an das Probegefäss 12 angeschlossen; die Bürette 4 hingegen ist mit dem Gefäss 11 über die Messzelle 13 verbunden. Zum Mischen der beiden Probeflüssigkeiten muss somit die Bürette 3 nach dem Aufziehen des gewünschten Volumens der einen Flüssigkeit stossen, während die Bürette 4 mit entsprechend dem gewünschten Volumen der anderen Flüssigkeit grösserer Geschwindigkeit aufziehen muss.

Diese Variante der Vorrichtung ist vor allem dann von Vorteil, wenn von der einen Probeflüssigkeit (im Gefäss 11) nur ganz kleine Mengen zur Verfügung stehen bzw. hinzugemischt werden sollen. Die Steuerung der Bürettenmotoren erfolgt sinngemäss gleich wie bei der Variante nach Fig. 1.

Bei den dargestellten Ausführungsbeispielen besteht die Mischarmatur 7 aus einem einfachen T-Stück. Es versteht sich, dass stattdessen auch z.B. eine Mischspirale, ein X-Y-Mischer oder ein Strömungswirbelmischer eingesetzt werden könnte. Solche Mischer sind z.B. in Helv. Chim. Acta XL, S. 907, 1957 und The Journal of Automatic Chemistry, Vol. 1, No. 1 Okt. 1978 pp 15-21 beschrieben.

Ferner ist es selbstverständlich auch möglich, anstelle von den gezeigten zwei Büretten drei oder mehrere vorzusehen. Die Steuerung derselben wäre sinngemäss gleich wie bei nur zwei Büretten.

**Patentansprüche**

1. Mischvorrichtung zur Erzeugung eines volumetrisch begrenzten, zeitlich im wesentlichen homogenen Flüssigkeitsstroms aus vorgegebenen Volumina zweier Komponenten, insbesondere zur Speisung von Durchflussmesszellen, mit je einer motorisch angetriebenen Dosierpumpe (3, 4) für die beiden Komponenten und mit einer eine Eingabe für die gewünschten Volumina ($l_1$, $l_2$) der beiden zu mischenden Komponenten aufweisenden elektrischen Steuerung (14) für die Dosierpumpen, dadurch gekennzeichnet, dass die Steuerung (14) die Förderleistung der beiden Dosierpumpen (3, 4) aufgrund der eingegebenen beiden Volumina ($l_1$, $l_2$) automatisch so steuert, dass die beiden Flüssigkeitsvolumina in im wesentlichen der gleichen Zeit und je mit im wesentlichen gleichförmiger Geschwindigkeit gefördert werden.

2. Vorrichtung nach Anspruch 1, wobei die Dosierpumpen (3, 4) von Schrittmotoren (1, 2) angetrieben sind, die von der Steuerung (14) mit Schrittimpulsen beaufschlagt werden, deren zeitlicher Abstand die Dosiergeschwindigkeit bestimmt, dadurch gekennzeichnet, dass die Steuerung (14) Rechenmittel (141) umfasst, welche die zeitlichen Abstände ($T_1$, $T_2$) zwischen den einzelnen Schrittimpulsen für die beiden Dosierpumpen (3, 4) in Abhängigkeit von den eingegebenen Volumina ($l_1$, $l_2$) der beiden zu mischenden Komponeten ermitteln.

3. Vorrichtung nach Anspruch 2, dadurch gekennzeichnet, dass die Rechenmittel (141) die zeitlichen Abstände ($T_1$, $T_2$) zwischen den einzelnen Schrittimpulsen als je ein ganzzahliges Vielfaches der Taktperiode eines in der Steuerung (14) enthaltenen Taktgenerators ermitteln.

4. Vorrichtung nach Anspruch 3, dadurch gekennzeichnet, dass die Rechenmittel (141) die beiden ganzzahligen Vielfachen derart bestimmen, dass beginnend bei einer vorgegebenen Minimalzahl, eine erste Anzahl von Taktperioden für die eine Dosierpumpe solange schrittweise um Eins erhöht wird, bis eine aus dem Verhältnis der beiden Komponentenvolumina und der jeweiligen ersten Anzahl rechnerisch resultierende zweite Anzahl von Taktperioden für die andere Dosierpumpe um nicht mehr als einen vorgegebenen Wert von einer ganzen Zahl abweicht, wobei dann die jeweilige erste Anzahl das erste ganzzahlige Vielfache und die genannte ganze Zahl das zweite ganzzahlige Vielfache bilden.

5. Vorrichtung nach einem der Ansprüche 2 bis 4, dadurch gekennzeichnet, dass die Steuerung (14) einen programmierbaren Rechner (141), Servoverstärker (144) für die Dosierpumpenmotoren (1, 2) und eine den Rechner (141) mit den Servoverstärkern (144) verbindende Schnittstelle (142) umfasst, wobei die Rechenmittel durch den Rechner gebildet und die Eingabemittel diejenigen des Rechners sind.

6. Vorrichtung nach Anspruch 5, dadurch gekennzeichnet, dass die Schnittstelle (142) aufgrund der von den Rechenmitteln (141) ermittelten zeitlichen Abstände ($T_1$, $T_2$) die Schrittimpulse für die Dosierpumpen (3, 4) erzeugt.

7. Vorrichtung nach einem der vorangehenden Ansprüche, dadurch gekennzeichnet, dass die Dosierpumpen (3, 4) Kolbenbüretten sind, die über je ein elektrisches, von der Steuerung (14) gesteuertes Umschalteventil (5, 6) mit einer gemeinsamen Mischarmatur (7) bzw. Anschlussleitungen (15, 16) zur Zufuhr der beiden flüssigen Komponenten verbunden sind.

8. Vorrichtung nach Anspruch 7, dadurch gekennzeichnet, dass wenigstens eine der Anschlussleitungen (15, 16) ein von der Steuerung (14) angesteuertes Zwei- oder Mehrwegeventil (8) zur wahlweisen Zufuhr verschiedener Komponenten enthält.

9. Vorrichtung nach Anspruch 7, dadurch gekennzeichnet, dass wenigstens eine der Anschlussleitungen (15, 16) an einen von der Steuerung (14) angesteuerten Probenwechsler (10) angeschlossen ist.

10. Vorrichtung nach einem der Ansprüche 1 bis 6, dadurch gekennzeichnet, dass die Dosierpumpen (3, 4) Kolbenbüretten sind, die über je ein elektrisches, von der Steuerung (14) angesteuertes Umschalteventil (5, 6) in deren einen Stellung untereinander über eine Durchflussmesszelle (13) und mit einer Anschlussleitung für eine der flüssigen Komponenten verbunden sind, und die in der anderen Stellung der Umschaltventile (5, 6) mit einer Anschlussleitung für die andere flüssige Komponente bzw. mit einer Abflussleitung verbunden sind.

## Claims

1. A mixing apparatus for producing a flow of a defined volume of a liquid which is substantially homogeneous over any period of time, from predetermined volumes of two components, more particularly for feeding flow measuring cells, comprising a motor-driven metering pump (3, 4) for each of the two components and an electric control system (14) for the metering pumps, said system having an input for the required volumes ($l_1$, $l_2$) of the two components for mixing, characterised in that the control system (14) automatically so controls the delivery of the two metering pumps (3, 4) on the basis of the two volumes ($l_1$, $l_2$) input that the two volumes of liquid are delivered in substantially the same time and each at substantially uniform speed.

2. Apparatus according to claim 1, in which the metering pumps (3, 4) are driven by stepping motors (1, 2) to which the control system (14) supplies stepping pulses, the interval of time between which determines the metering speed, characterised in that the control system (14) includes computer means (141) which determine the intervals of time ($T_1$, $T_2$) between the individual stepping pulses for the two metering pumps (3, 4) in dependence on the input volumes ($l_1$, $l_2$) of the two components for mixing.

3. Apparatus according to claim 2, characterised in that the computer means (141) determine the intervals of time ($T_1$, $T_2$) between the individual stepping pulses in each case in the form of an integral multiple of the clock pulse period of a clock pulse generator contained in the control system (14).

4. Apparatus according to claim 3, characterised in that the computer means (141) so determine the two integral multiples that, starting from a predetermined minimum number, a first number of clock pulse periods for one of the metering pumps is incremented by one stepwise until a second number of clock pulse periods for the other metering pump computed from the ratio of the two component volumes and the first number deviates from an integer by not more than a predetermined value, the respective first number forming the first integral multiple and the said second number forming the second integral multiple.

5. Apparatus according to any one of claims 2 to 4, characterised in that the control system (14) comprises a programmable computer (141), servo-amplifiers (144) for the metering pump motors (1, 2) and an interface (142) connecting the computer (141) to the servo amplifiers (144), the computer means being formed by the computer and the input means being those of the computer.

6. Apparatus according to claim 5, characterised in that the interface (142) produces the stepping pulses for the metering pumps (3, 4) on the basis of the intervals of time $(T_1, T_2)$ determined by the computer means (141).

7. Apparatus according to any one of the preceding claims, characterised in that the metering pumps (3, 4) are piston burettes, each connected, via an electric changeover valve (5, 6) controlled by the control system (14), to a common mixing device (7) or feed lines (15, 16) for the supply of the two liquid components.

8. Apparatus according to claim 7, characterised in that at least one of the feed lines (15, 16) contains a two or multi-way valve (8) for selective supply of different components, said valve being controlled by the control system (14).

9. Apparatus according to claim 7, characterised in that at least one of the feed lines (15, 16) is connected to a sampler changer (10) controlled by the control system (14).

10. Apparatus according to any one of claims 1 to 6, characterised in that the metering pumps (3, 4) are piston burettes which in one position of electric change-over valves (5, 6) controlled by the control system (14) are interconnected via a flow measurement cell (13) and are each connected to a feed line for one of the liquid components, while in the other position of the change-over valves (5, 6) said piston burettes are connected to a feed line for the other liquid component or to a discharge line.

**Revendications**

1. Dispositif mélangeur destiné à la production d'un écoulement ou courant de liquide sensiblement homogène en fonction du temps et volumétriquement limité, constitué par des volumes préétablis de deux composants, notamment pour l'alimentation de cellules de mesure de débit, comprenant une pompe doseuse (3, 4) entraînée par moteur pour chacun des deux composants et une commande électrique (14) pour les pompes doseuses, commande qui présente une entrée pour les volumes souhaités $(I_1, I_2)$ des deux composants à mélanger, caractérisé en ce que la commande (14) commande automatiquement le débit des deux pompes doseuses (3, 4) sur la base des deux volumes introduits $(I_1, I_2)$, de telle manière que les deux volumes de liquide sont refoulés sensiblement pendant le même laps de temps et chacun à une vitesse sensiblement constante.

2. Dispositif selon la revendication 1, les pompes doseuses (3, 4) étant entraînées par des moteurs pas-à-pas (1, 2) auxquels la commande (14) transmet des impulsions de pas, l'intervalle de temps entre ces impulsions déterminant la vitesse de dosage, caractérisé en ce que la commande (14) comprend des moyens de calcul (141) qui déterminent les intervalles de temps $(T_1, T_2)$ entre les différentes impulsions de pas pour les deux pompes doseuses (3, 4) en fonction des volumes introduits $(I_1, I_2)$ des deux composants à mélanger.

3. Dispositif selon la revendication 2, caractérisé en ce que les moyens de calcul (141) déterminent les intervalles de temps $(T_1, T_2)$ entre les différentes impulsions de pas, chacun sous la forme d'un multiple entier de la période de cadence d'un générateur de cadence contenu dans la commande (14).

4. Dispositif selon la revendication 3, caractérisé en ce que les moyens de calcul (141) déterminent les deux multiples entiers de telle manière qu'en débutant avec un nombre minimum préétabli, le premier nombre de périodes de cadence pour l'une des pompes doseuses est augmenté pas-à-pas d'une unité jusqu'à ce qu'un deuxième nombre de périodes de cadence pour l'autre pompe doseuse, lequel est le résultat d'un calcul effectué à partir du rapport des deux volumes de composants et du premier nombre considéré, ne s'écarte plus d'un nombre entier que d'une valeur préétablie, le premier nombre considéré constituant alors le premier multiple entier et le nombre entier précédemment mentionné le second multiple entier.

5. Dispositif selon l'une des revendications 2 à 4, caractérisé en ce que la commande (14) comprend une calculatrice programmable (141), des servo-amplificateurs (144) pour les moteurs (1, 2) des pompes doseuses, et une interface (142) qui relie la calculatrice (141) aux servo-amplificateurs (144), les moyens de calcul étant constitués par la calculatrice et les moyens d'entrée étant ceux de ladite calculatrice.

6. Dispositif selon la revendication 5, caractérisé en ce que l'interface (142) produit des impulsions de pas pour les pompes doseuses (3, 4) sur la base des intervalles de temps $(T_1, T_2)$ déterminés par les moyens de calcul (141).

7. Dispositif selon l'une des revendications précédentes, caractérisé en ce que les pompes doseuses (3, 4) sont des burettes à piston qui sont reliées, chacune par l'intermédiaire d'une soupape d'inversion (5, 6) électrique, actionnée par la commande (14), à une robinetterie mélangeuse commune (7) ou à des conduites de rac-

cordement (15, 16) pour l'admission ou l'amenée des deux composants liquides.

8. Dispositif selon la revendication 7, caractérisé en ce que l'une des conduites de raccordement (15, 16) au moins contient une soupape à deux voies ou à voies multiples (8) actionnée par la commande (14) et destinée à l'admission ou l'amenée, au choix, de différents composants.

9. Dispositif selon la revendication 7, caractérisé en ce que l'une des conduites de raccordement (15, 16) au moins est reliée à un échangeur ou passeur d'échantillons (10) actionné par la commande (14).

10. Dispositif selon l'une des revendications 1 à 6, caractérisé en ce que les pompes doseuses (3, 4) sont des burettes à piston qui sont reliées, chacune par l'intermédiaire d'une soupape d'inversion (5, 6) électrique, actionnée par la commande (14), dans l'une des positions desdites soupapes, entre elles par l'intermédiaire d'une cellule de mesure de débit (13) et à une conduite de raccordement prévue pour l'un des composants liquides, et dans l'autre position desdites soupapes d'inversion (5, 6) à une conduite de raccordement prévue pour l'autre composant liquide ou à une conduite d'évacuation.

**Fig:1**

0 019 579

# Fig.2

_Fig.3_